**Europäisches Patentamt**

(19) **European Patent Office**

**Office européen des brevets**

(11) Veröffentlichungsnummer: **0 208 010**
**B1**

(12) **EUROPÄISCHE PATENTSCHRIFT**

(45) Veröffentlichungstag der Patentschrift:
**16.08.89**

(51) Int. Cl.⁴: **A01B 29/04**

(21) Anmeldenummer: **85108563.9**

(22) Anmeldetag: **10.07.85**

(54) Bodenwalze für die Bodenbearbeitung in der Landwirtschaft.

(43) Veröffentlichungstag der Anmeldung:
**14.01.87 Patentblatt 87/3**

(45) Bekanntmachung des Hinweises auf die Patenterteilung:
**16.08.89 Patentblatt 89/33**

(84) Benannte Vertragsstaaten:
**DE FR GB IT NL**

(56) Entgegenhaltungen:
**GB-A- 212 703**
**US-A- 2 261 893**

(73) Patentinhaber: **Rabewerk Heinrich Clausing, D-4515 Bad Essen 1(DE)**

(72) Erfinder: **Warnking, Richard, Dipl.-Ing., Klockenpatt 5, D-4515 Bad Essen 1(DE)**

(74) Vertreter: **Patentanwälte Dipl.-Ing. R. Schlee Dipl.-Ing. A. Missling, Bismarckstrasse 43, D-6300 Giessen(DE)**

## Beschreibung

Die Erfindung bezieht sich auf eine Bodenwalze für die Bodenbearbeitung in der Landwirtschaft, insbesondere auf eine als Bodenstütze dienende Nachlaufwalze einer Bodenbearbeitungsmaschine mit aktiv angetriebenen Werkzeugen, wie etwa einer Bodenfräse oder Kreiselegge. Die Bodenwalze weist einen im wesentlichen zylindrischen Mantel auf, welcher mit mehreren sich in radialer Richtung um den Umfang des Mantels erstreckenden Zahnringen versehen ist, sowie mehrere im Bereich der nicht mit Zahnringen besetzten zylindrischen Abschnitte des Mantels angeordnete Abstreifer.

An Bodenwalzen kann leicht Erde festkleben, insbesondere dann, wenn der Boden eine lehmige Beschaffenheit hat und feucht ist. Stabwalzen können dann meist nicht mehr verwendet werden, sondern es müssen Walzen mit einem Walzenkörper verwendet werden, der eine geschlossene Oberfläche hat, die meist mit Vorsprüngen, z.B. Zähnen, besetzt ist. Um die Zwischenräume zwischen den Zähnen von anklebender Erde frei zu halten, werden Abstreifer verwendet, die angeklebte Erde abstreifen, bevor die Walzenoberfläche erneut mit dem Boden in Berührung kommt. Dadurch vermeidet man größere Erdansammlungen auf der Walze und die Bildung größerer Erdbrocken, die die gleichmäßige Tiefenhaltung beeinträchtigen und schließlich von der Walze abfallen würden.

Die meisten bekannten Abstreifer sind schaberartig ausgebildet und stehen relativ zum Walzenkörper etwa tangential, so daß Bodenschichten etwa spanartig abgelöst werden. Bei der Bodenwalze nach der DE-A 33 17 485 sind die Abstreifer an schwenkbaren Haltern befestigt, die unter Überwindung einer Federkraft ausschwenken können. Bei der Walze nach der DE-A 32 19 373 sind die Abstreifer in sich federnd. Bei beiden bekannten Bodenwalzen hat der Walzenkörper einen zylindrischen Mantel und die Schabkanten der Abstreifer liegen an Mantellinien des zylindrischen Mantels an. Da die zylindrischen Mäntel unvermeidbare Herstellungsungenauigkeiten aufweisen, läßt sich nicht vermeiden, daß die Abstreifer mit verhältnismäßig großer Kraft am zylindrischen Mantel anliegen, was eine starke Abnutzung der Abstreifer mit sich bringt und den Zugwiderstand wesentlich erhöht. Eine vollkommene Entoft nicht möglich, da die starren Schaber einen Sicherheitsabstand von Walzenunebenheiten, z.B. Zähnen, aufweisen müssen.

Aus der GB-A 212 703 ist eine Bodenwalze bekannt, welche einen glatten, zylindrischen Mantel aufweist. Die Bodenwalze ist mit einer zylindrischen, sich im wesentlichen über deren gesamte Breite erstreckenden zylindrischen Bürste versehen, die auf dem Mantel der Bodenwalze abrollt und durch eine Drehung der Bodenwalze angetrieben wird. Bei dieser Bodenwalze erweist es sich als nachteilig, daß die Bürste schon bei einem geringen Verschmutzungsgrad der Bodenwalze eine Drehung derselben einen erheblichen Widerstand entgegensetzt, so daß die Bodenwalze über dem Ackerboden nicht mehr abrollen kann.

Der Erfindung liegt die Aufgabe zugrunde, eine Bodenwalze der eingangs genannten Art zu schaffen, welche bei einfachem Aufbau und betriebssicherer Wirkungsweise leicht vollständig reinigbar ist und bei welcher der Walzenkörper mit einem geringen Reibungswiderstand beaufschlagt wird.

Die Erfindung wird erfindungsgemäß dadurch gelöst, daß im Bereich der zylindrischen Abschnitte Bürsten mit elastischen Borsten vorgesehen sind.

Bürstenförmige Abstreifer haben den Vorteil, daß sie sich auch an Walzenkörper anpassen können, die von einer zylindrischen oder sonstigen rotationssymmetrischen Form mehr oder weniger stark abweichen. Wegen der Nachgiebigkeit von Bürsten erhöhen sich die Reibungskräfte bei stärkerer Zusammendrückung der Bürsten nicht so stark, daß die Bürsten eine unzuträgliche Abbremsung des Walzenkörpers bewirken, so daß dieser stets sicher auf dem Boden abrollen kann, also nicht über den Boden geschleift wird.

Vorzugsweise sind die Bürsten drehbar. Besonders wirksam sind Abstreiferbürsten, wenn sie mittels eines Drehantriebes bewegbar sind. Man kann dann den Bürsten eine hohe Umfangsgeschwindigkeit erteilen und dadurch die Reinigungswirkung wesentlich erhöhen. Bei drehbaren Bürsten ist es zweckmäßig, diese an parallel zur Walzen-Drehachse verlaufenden Wellen anzuordnen.

Ein aktiver Antrieb der Bürsten kann vom Walzenkörper aus erfolgen. Diese Antriebsart hat den Vorteil, daß die Walze nicht an ein System angeschlossen werden muß, das Antriebsenergie liefert. Die Bürsten können jedoch auch von einem unabhängigen Antrieb, wie z.B. einem Ölmotor, angetrieben werden. Dies hat gegenüber einem Antrieb durch den Walzenkörper den Vorteil, daß die Walze nicht gebremst wird. Die Bürsten können in diesem Fall sogar eine antreibende Wirkung auf die Walze ausüben, nämlich dann, wenn die Drehrichtung der Bürsten gemäß Anspruch 7 entgegengesetzt zur Drehrichtung der Walze ist. Um eine optimale Wirkung der Bürsten bei der jeweiligen Bodenbeschaffenheit einstellen zu können, ist die Drehgeschwindigkeit der Bürsten und/oder das Drehgeschwindigkeitsverhältnis zwischen Walzenkörper und Bürste vorzugsweise verstellbar.

Der Walzenkörper kann Rotationsflächen aufweisen. Ein besonderer Vorteil der Verwendung von Bürsten jedoch ist, daß die Umfangsflächen auch von Rotationsflächen abweichen können wegen der großen Anpassungsfähigkeit von Bürsten. Die Walzen können Vorsprünge aufweisen, wie dies an sich bekannt ist. Insbesondere kann die Walze eine Zahnwalze sein.

Für die Borsten der Bürsten kommen verschiedene Materialien in Betracht, insbesondere Metall, wie Stahldraht, und/oder Kunststoff und/oder Gummi.

Die Bürste kann zylindrisch sein oder die Form von Zylindersegmenten aufweisen. Dadurch wird ein gleich mäßiger Andruck der Borsten während der gesamten Umdrehung der Bürste erzielt.

Die erfindungsgemäßen Bürsten können auch mit an sich bekannten klingenförmigen Abstreifern kombiniert sein. In diesem Fall übernehmen die klingenförmigen Abstreifer eine Grobreinigung, während die Bürsten eine Nachreinigung ausführen. Der Vorteil der Erfindung liegt in diesem Fall hauptsächlich in einer vollständigen Reinigung des Walzenkörpers. Wegen der Nachreinigung der Oberfläche des Walzenkörpers durch die Bürsten kann man in diesem Fall auch einen gewissen Abstand der Klingen von der Walzenoberfläche zulassen und dadurch den Bremswiderstand im Vergleich mit bekannten Abstreifern und deren Abnutzung vermindern.

Im Prinzip können die Bürsten an jeder Stelle des Walzenumfanges angeordnet werden, die oberhalb des Bodens liegt. Besonders zweckmäßig ist eine Anordnung gemäß Anspruch 12.

Bei einer vorteilhaften Ausführungsform der Erfindung ist jeder Bürste ein relativ zu ihr fest angeordneter Schaber zugeordnet, wobei der Schaber als Bürstenträger ausgebildet sein kann. Bei drehbaren Bürsten dreht sich auch der Schaber, dessen Schabkante dabei jedoch vorzugsweise mit der Oberfläche des Walzenkörpers nicht in Berührung kommt, sondern eine Vorreinigungsaufgabe hat, wobei dickere Erdbrocken abgeschabt werden, während die Feinreinigung von der Bürste übernommen wird. Der Schaber kann gemäß Anspruch 15 in einzelne Finger aufgelöst sein, wobei einander diametral gegenüberstehende Finger vorzugsweise gemäß Anspruch 16 angeordnet sind, wodurch eine vollständige Abkratzung der Oberfläche des Walzenkörpers stattfindet. Die Auflösung der Abstreifer in Finger ergibt eine aufbrechende Wirkung auf anhaftende Erde.

Die Bürsten greifen zwischen benachbarte Gruppen aus Erhöhungen vorzugsweise mit Vorspannung ein. Dadurch wird eine besonders gute Reinigungswirkung in Ecken erzielt. Eine solche Reinigung ist mit starren Abstreifern nicht möglich. Eine gute Reinigungswirkung läßt sich auch mit als Taumelscheiben ausgebildeten Bürsten erreichen. Solche Bürsten haben den Vorteil, daß sie selbstreinigend und leichter und billiger sind als zylindrische Bürsten.

Die Bürsten können auch längs dem Walzenkörper hin- und herbewegbar sein, wodurch die Relativgeschwindigkeit zwischen Bürsten und Walzenkörper ebenfalls erhöht und dadurch die Reinigungswirkung verbessert wird Die Hin und Herbewegbarkeit der Bürsten gestattet ebenfalls die Verwendung relativ kleiner und damit leichter und billiger Bürsten. Vorzugsweise sind die Bürsten nachstellbar, um Verschleiß der Borsten kompensieren zu können.

In der Zeichnung sind Ausführungsbeispiele der Erfindung dargestellt. Es zeigen:

Fig. 1 eine Seitenansicht einer Bodenbearbeitungsmaschine mit einer Nachlaufwalze entsprechend dem Pfeil I in Fig. 2, wobei jedoch Fig. 1 gegenüber der klapprichtigen Lage entgegen dem Uhrzeigersinn um 90° verdreht ist,

Fig. 2 eine Draufsicht auf die Bodenbearbeitungsmaschine entsprechend dem Pfeil II in Fig. 1, wobei jedoch Fig. 2 gegenüber der klaporichtigen Lage um 90° im Uhrzeigersinn verdreht ist,

Fig. 3 eine Seitenansicht einer Bodenwalze mit Darstellung eines Bürstenantriebes,

Fig. 4 einen diametralen Schnitt durch eine drehbare Bürste,

Fig. 5 eine axiale Ansicht einer drehbaren Bürste, die in Segmente aufgelöst ist,

Fig. 6 die Ansicht einer als Taumelscheibe ausgebildeten Bürste,

Fig. 7 eine Seitenansicht einer Bodenbearbeitungsmaschine mit Nachlaufwalze, wobei die Nachlaufwalze mittels eines hydraulischen Motors antreibbar ist,

Fig. 8 eine axiale Ansicht einer Bürstenwelle mit zwei diametral daran angeordneten Bürsten,

Fig. 9 eine Teildraufsicht auf den Walzenkörper und eine Bürstenwelle, wobei jedoch nur Schaber dargestellt sind,

Fig.10 eine der Fig. 9 entsprechende Teilansicht einer Ausführungsform, bei der Schaber in Finger aufgelöst sind.

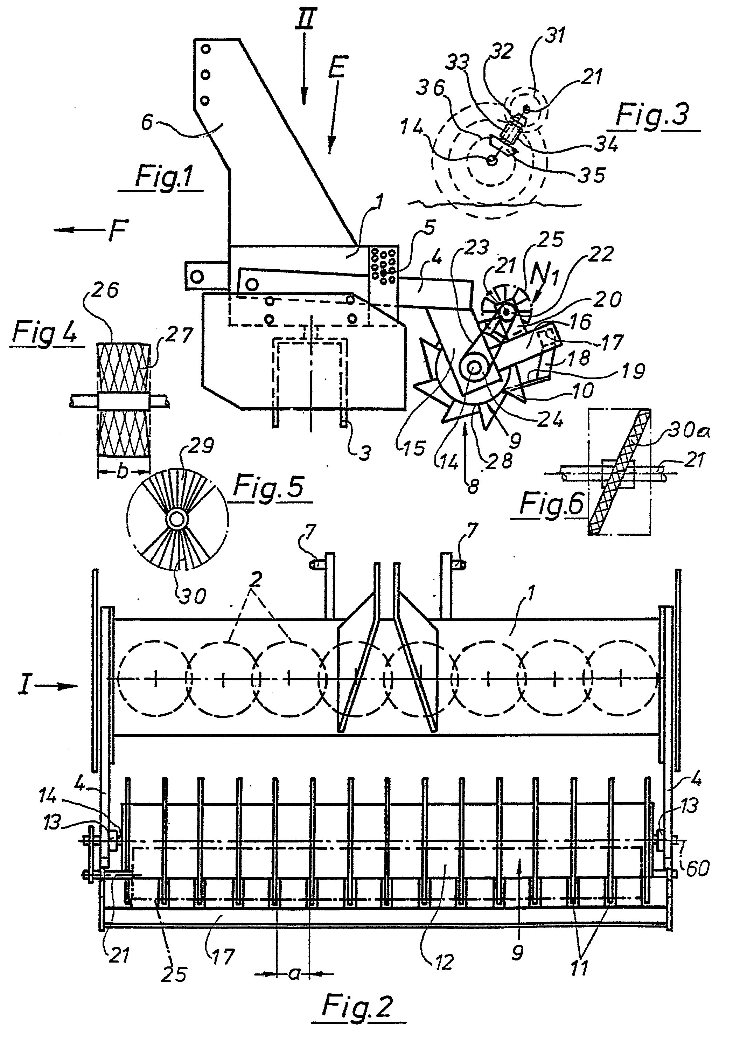

Fig. 1 zeigt eine Kreiselegge, bestehend aus einem Eggenteil E und einer als Bodenstütze dienenden Nachlaufwalze $N_1$, die bei der Arbeit in der Fahrtrichtung F bewegt wird. Der Eggenteil E ist wie üblich ausgebildet und hat einen Getriebekasten 1, in dem mehrere Kreisel 2 drehbar gelagert sind. Die Kreisel sind drehantriebsmäßig so miteinander gekuppelt, daß nebeneinanderliegende Kreisel entgegen gesetzte Drehrichtungen haben. Zur Einstellung der Eingriffstiefe der Zinken 3 dient die Nachlaufwalze $N_1$, die an Armen 4 gelagert ist. Die Arme 4 sind relativ zum Getriebekasten 1 schwenkbar, wobei die höchste Lage durch einen Arretierungsbolzen 5 bestimmbar ist, der wahlweise in eines von mehreren Löchern einsteckbar ist. Das gesamte Gerät ist an das Dreipunktgestänge eines Schleppers ankuppelbar, zu welchem Zwecke ein Turm 6 und Anlenkungszapfen 7 vorgesehen sind. Die Erfindung befaßt sich mit der Beschaffenheit der Nachlaufwalze $N_1$, insbesondere mit der Ausbildung der Reinigungsvorrichtung dieser Walze.

Die Nachlaufwalze $N_1$ hat einen Walzenkörper 8 mit einem zylindrischen Mantel 9, der als Rohr aus Stahlblech ausgebildet ist. Der Mantel 9 ist mit Zähnen 10 besetzt. Die Zähne 10 sind gruppenweise in den Mantel 9 umgebenden Zahnringen 11 angeordnet. Zwischen den Ringen 11 befinden sich zylindrische Abschnitte 12 des Walzenmantels 9.

Der um eine Achse 60 drehbare Walzenkörper 8 ist in Lagern 13 gelagert, die sich an den Armen 4 befinden. In die Lage 13 greifen Achsstummel 14 ein, die mit Endscheiben des Walzenmantels verschweißt sind. Die Lager 13 befinden sich an Platten 15, die von den Armen 4 nach unten abragen und als Bestandteile der Arme aufgefaßt werden können.

Mit den Platten 15 sind nach hinten oben ragende Arme 16 verschweißt, zwischen denen sich ein Tragbalken 17 erstreckt. Am Tragbalken 17 sind Abstreifer 18 befestigt, die Abstreiferklingen 19 tragen, die etwa tangential zum zylindrischen Walzenmantel 9 verlaufen. Die Abstreifer 18 können von konventioneller Bauart sein.

Von den Armen 16 erheben sich Lagerplatten 20, in denen eine Bürstenwelle 21 drehbar gelagert ist.

Die Bürstenwelle 21 trägt eine Bürste 25. Mit der Bürstenwelle 21 ist drehfest ein Kettenrad 22 verbunden, über das eine Antriebskette 23 gelegt ist. Die Kette 23 umgreift ein weiteres, größeres Kettenrad 24, das drehfest mit dem Achsstummel 14 des Walzenkörpers 8 verbunden ist. Der beschriebene Drehantrieb für die Bürstenwelle 21 kann an beiden Enden der Bürstenwelle vorgesehen sein.

Die Bürste 25 kann verschiedene Formen haben. In den Fig. 4, 5 und 6 sind drei Beispiele hierfür dargestellt.

Vorzugsweise ist die Bürste so beschaffen, daß sie aus einzelnen Abschnitten besteht, die zwischen die Zahnringe 11 eingreifen. In Fig. 4 ist ein solcher Abschnitt dargestellt. Fig. 4 zeigt, daß sich die Bürste zu ihrer Umfangsfläche 26 hin verbreitert. Die Breite b am Umfang ist bei dem dargestellten Ausführungsbeispiel im entspannten Zustand der Bürste größer als der lichte Abstand a zwischen benachbarten Ringen 11. Dadurch erreicht man, daß die Borsten der Randbereiche 27 kräftig in die Innenkanten 28 eingreifen, die an den Ansatzstellen der Zähne 10 zwischen den Seitenflächen der Zähne und den zylindrischen Abschnitten 12 des Walzenmantels 9 vorhanden sind.

Fig. 5 zeigt eine Bürste, die in Segmente 29, 30 aufgelöst ist. Diese Bürstenform begünstigt die Selbstreinigung der Bürste, da ein Segment abgebürstete Erde sozusagen vor sich her schieben und sich elastisch bewegen kann.

Fig. 6 zeigt eine Bürste, die als Taumelscheibe 30a ausgebildet ist. Die Bürste ist eine ebene Scheibe, die relativ zu der Bürstenwelle 21 schief steht. Auch mit dieser Bürstenform wird die Selbstreinigung der Bürste begünstigt.

In Fig. 3 ist ein alternativer Antrieb für die Bürstenwelle 21 dargestellt. Auf der Bürstenwelle 21 sitzt an mindestens einem Ende ein Kegelrad 31, das mit einem weiteren Kegelrad 32 kämmt Das Kegelrad 32 sitzt auf einer Welle 33, die in einer Hülse 34 gelagert ist. Die Hülse 34 ist an der Tragkonstruktion für die Bürstenwelle 21 befestigt, z.B. angeschweißt. Am unteren Ende der Welle 33 sitzt drehfest ein Kegelrad 35, das mit einem Kegelrad 36 kämmt, das drehfest mit dem Achsstummel 14 des Walzenkörpers 8 verbunden ist.

Mit der Antriebseinrichtung nach Fig. 3 wird erreicht, daß die Bürstenwelle 21 gegenläufig zu dem Walzenkörper rotiert, wodurch die Relativgeschwindigkeit zwischen Bürste und Walzenkörper erhöht wird. Bei dem Antrieb nach den Fig. 1 und 2 rotieren Walzenkörper 8 und Bürste 25 mit gleicher Drehrichtung.

Die relativen Drehzahlen zwischen Walzenkörper 8 und Bürstenwelle 21 kann durch Auswechseln von Rädern verändert werden, so daß eine optimale Anpassung an die jeweilige Bodenbeschaffenheit möglich ist.

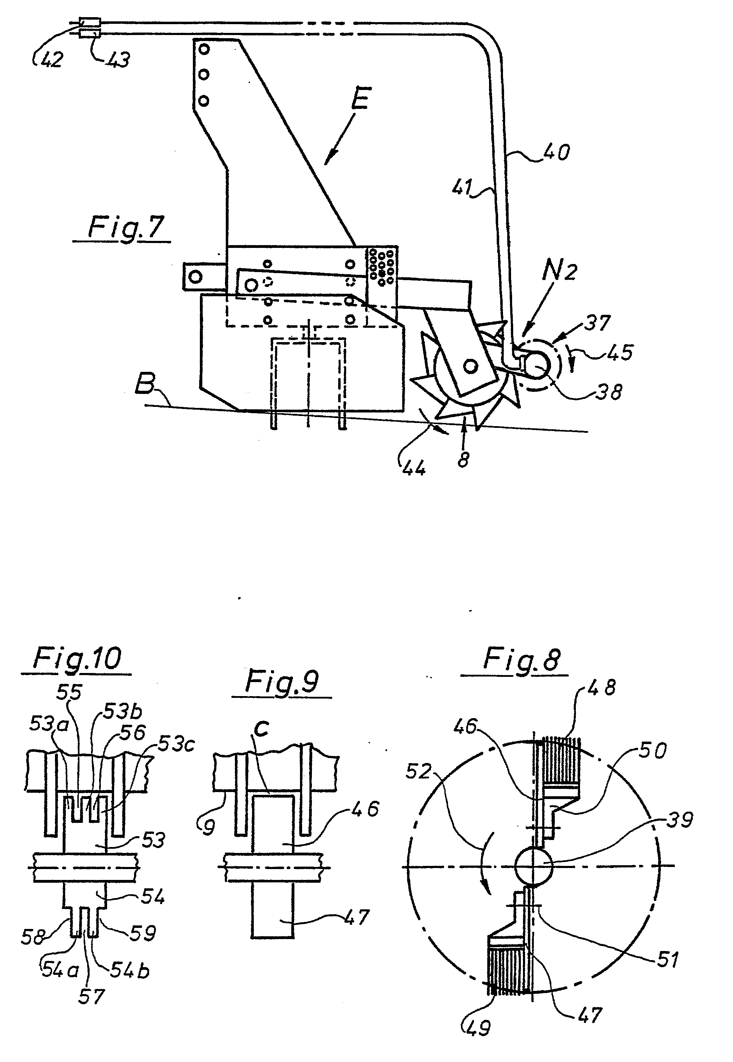

Bei der Ausführungsform nach Fig. 7 ist die Nachlaufwalze mit N2 bezeichnet. Der Walzenkörper 8 ist gleich ausgebildet wie bei der Ausführungsform nach den Fig. 1 und 2. Es fehlen jedoch die konventionellen Abstreifer 18, die gemäß den Fig. 1 und 2 vorgesehen sind. Stattdessen wird eine Bürste alleine oder in Kombination mit Schabern verwendet, wie sie in den Fig. 8 bis 10 dargestellt sind. Auch der Antrieb der insgesamt mit 37 bezeichneten Bürste ist verschieden.

Zum Antrieb dient ein hydraulischer Motor 38, dessen Welle drehfest mit der Bürstenwelle 39 verbunden ist. Der Hydraulikmotor 38 wird über eine Zuführleitung 40 mit Drucköl gespeist, das über eine Abführleitung 41 in das Hydraulik system des Schleppers zurückgeführt wird. Die Leitungen 40, 41 sind mittels Steckern 42, 43 an das Hydrauliksystem des Schleppers ankuppelbar. Die Drehrichtung des Hydraulikmotors kann umgedreht werden, wenn Drucköl durch die Leitung 41 zugeführt und durch die Leitung 40 abgeführt wird. Der Walzenkörper 8 rotiert infolge seines Abrollens auf dem Boden B in Richtung des Pfeiles 44. Der Hydraulikmotor 38 wird vorzugsweise so angetrieben, daß die Bürste 37 in Richtung des Pfeiles 45 rotiert. Dadurch übt die Bürste eine antreibende Wirkung auf die Walze 8 aus, wodurch einem Rutschen der Walze auf dem Boden B vorgebeugt wird.

An der Bürstenwelle 39 sind einander diametral gegenüberliegend Schaber 46, 47 befestigt. Die Schaber 46, 47 dienen zugleich als Träger von Bürsten 48, 49. Jede Bürste hat einen Burstenkörper 50, der relativ zum zugeordneten Schaber 46 oder 47 radial verschiebbar und in jeder Einstellage arretierbar ist. Die Befestigung ist symbolisch durch Linien 51 angedeutet.

Die Bürstenwelle 39 wird in Richtung des Pfeiles 52 angetrieben, so daß die Schaber 46, 47 den Bürsten 48, 49 voreilen. Die Schaber 46, 47 können einen gewissen Abstand c von dem zylindrischen Mantel 9 haben um Verschleiß des Mantels und der Schaber zu vermeiden. Die Schaber 46, 47 schlagen zunächst grobe Erdbrocken ab, wonach die vollständige Reinigung durch die Bürsten 48, 49 bewirkt wird.

Die Schaber können aber auch gemäß Fig. 10 ausgebildet sein. Die dort mit 53, 54 bezeichneten Schaber sind in Finger 53a, 53b, 53c bzw. 54a, 54b aufgelöst. Die Finger 53a, 53b, 53c und 54a, 54b sind relativ zueinander so angeordnet, daß den Lücken 55, 56 des Schabers 53 die Finger 54a und 54b gegenüberstehen. Andererseits steht der Lücke 57 der Finger 53 gegenüber. Den seitlichen Einschnitten 58, 59 des Schabers 54 stehen die Finger 53a, 53c des Schabers 53 gegenüber.

Die Auflösung der Schaber 53, 54 in Finger ist für die Ablösung von Erde vorteilhaft, weil eine Brechwirkung erzielt wird. Durch die beschriebene Anordnung der Finger der beiden Schaber 53,54 relativ zueinander erreicht man, daß vom Schaber 53 nicht bearbeitete Stellen vom Schaber 54 bearbeitet werden bzw. umgekehrt.

## Patentansprüche

1. Bodenwalze zur Bodenbearbeitung in der Landwirtschaft mit einem im wesentlichen zylindrischen Mantel (9), welcher mit mehreren, sich in radialer Richtung um den Umfang des Mantels (9) erstreckenden Zahnringen (11) versehen ist, und mit mehreren im Bereich der nicht mit Zahnringen (11) besetzten, zylindrischen Abschnitte (12) des Mantels (9) angeordneten Abstreifern (18; 46, 47), dadurch gekennzeichnet, daß im Bereich der zylindrischen Abschnitte (12) Bürsten (25, 37) mit elastischen Borsten vorgesehen sind.

2. Bodenwalze nach Anspruch 1, dadurch gekennzeichnet, daß die Bürsten (25; 37) drehbar sind.

3. Bodenwalze nach Anspruch 2, dadurch gekennzeichnet, daß die Bürsten (25, 37) mittels eines Drehantriebes (22, 23, 24; 31 bis 36; 38) bewegbar sind.

4. Bodenwalze nach einem der Ansprüche 2 und 3, gekennzeichnet durch mindestens eine sich parallel zur Walzen Drehachse (60) erstreckende Bürstenwelle (21; 39).

5. Bodenwalze nach einem der Ansprüche 3 und 4, dadurch gekennzeichnet, daß zwischen dem Walzenkörper (8) und den Bürsten (25) eine Antriebsverbindung besteht, z.B. ein Kettengetriebe (21, 22, 23), ein Riemengetriebe oder ein Zahnradgetriebe (31 bis 36), wobei ein Antriebsrad (24; 36) drehfest mit einer Walzenachse (14) verbunden ist.

6. Bodenwalze nach einem der Ansprüche 3 und 4, dadurch gekennzeichnet, daß die Bürsten (48, 49) einen vom Walzenkörper (8) unabhängigen Antrieb aufweisen, z.B. einen Hydraulikmotor (38), der an ein Hydrauliksystem eines Schleppers anschließbar ist oder ein Getriebe, das unmittelbar oder mittelbar mit der Zapfwelle eines Schleppers verbindbar ist.

7. Bodenwalze nach einem der Ansprüche 3 bis 6, insbesondere nach Anspruch 6, dadurch gekennzeichnet, daß die Drehrichtung (45) der Bürste (37) entgegengesetzt zur Drehrichtung (44) des Walzenkörpers (8) ist, so daß die Reibung der Bürste (37) am Walzenkörper (8) eine antreibende Wirkung ausübt.

8. Bodenwalze nach einem der Ansprüche 3 bis 7, dadurch gekennzeichnet, daß die absolute Drehgeschwindigkeit der Bürsten (37) und/oder das Drehgeschwindigkeitsverhältnis zwischen Walzenkörper (8) und Bürsten (25) verstellbar ist.

9. Bodenwalze nach einem der vorhergehenden Ansprüche, dadurch gekennzeichnet, daß die Bürsten (25; 37) aus Metall, insbesondere Stahl und/oder aus Kunststoff und/oder aus Gummi bestehen.

10. Bodenwalze nach einem der vorhergehenden Ansprüche, dadurch gekennzeichnet, daß die Bürsten eine zylindrische Form (Fig. 4) oder die Form von Zylindersegmenten (Fig. 5) haben, wobei die Zylinderachse parallel zur Drehachse (60) der Walze ist.

11. Bodenwalze nach einem der vorhergehenden Ansprüche, gekennzeichnet durch klingenförmige Abstreifer (19), die in Drehrichtung des Walzenkörpers (8) gesehen vorzugsweise vor den Bürsten (25) angeordnet sind.

12. Bodenwalze nach einem der vorhergehenden Ansprüche, insbesondere nach Anspruch 7, dadurch gekennzeichnet, daß die Bürsten (25) oberhalb des Walzenkörpers (8) angeordnet sind, vorzugsweise gegenüber einer vertikalen Längsmittelebene des Walzenkörpers (8) bezüglich der Fahrtrichtung (F) nach hinten versetzt.

13. Bodenwalze nach einem der vorhergehenden Ansprüche, dadurch gekennzeichnet, daß jeder Bürste (48, 49) ein relativ zu ihr fest angeordneter Schaber (46, 47) zugeordnet ist, der der Bürste (48, 49) voreilt.

14. Bodenwalze nach Anspruch 13, dadurch gekennzeichnet, daß der Schaber (46, 47) als Bürstenträger ausgebildet ist, wobei vorzugsweise dei Bürste (48, 49) längs des Schabers (46, 47) verstellbar ist.

15. Bodenwalze nach einem der Ansprüche 13 und 14, dadurch gekennzeichnet, daß der Schaber (53, 54) in einzelne Finger (53a, 53b, 53c, 54a, 54b) aufgelöst ist.

16. Bodenwalze nach Anspruch 15, dadurch gekennzeichnet, daß an einer drehbaren Welle (39) einander diametral gegenüberstehend zwei Schaber (53, 54) angeordnet sind und daß die Schaberfinger (53a, 53b, 53c bzw. 54a, 54b) so angeordnet sind, daß Lücken (55, 56 bzw. 57) zwischen den Fingern des einen Schabers Finger des anderen Schabers gegenüberstehen und umgekehrt.

17. Bodenwalze nach einem der vorhergehenden Ansprüche, dadurch gekennzeichnet, daß die Bürsten zwischen benachbarte Gruppen (11) aus Erhebungen (10) mit Vorspannung eingreifen.

18. Bodenwalze nach einem der vorhergehenden Ansprüche, dadurch gekennzeichnet, daß die Bürsten als Taumelscheiben (30a) ausgebildet sind.

19. Bodenwalze nach einem der vorhergehenden Ansprüche, dadurch gekennzeichnet, daß die Bürsten längs dem Walzenkörper hin- und herbewegbar sind.

20. Bodenwalze nach einem der vorhergehenden Ansprüche, dadurch gekennzeichnet, daß die Bürsten (48, 49) nachstellbar sind.

**Claims**

1. Soil roller for working the soil in agriculture, having a substantially cylindrical surface (9) which is provided with a plurality of tooth rings (11) extending in the radial direction around the periphery of the surface (9), and having a plurality of strippers (18; 46, 47) arranged in the region of the cylindrical sections (12) of the surface (9) not occupied by tooth rings (11), characterized in that brushes (25, 37) having resilient bristles are provided in the region of the cylindrical sections (12).

2. Soil roller according to Claim 1, characterized in that the brushes (25; 37) are rotatable.

3. Soil roller according to Claim 2, characterized in that the brushes (25, 37) are movable by means of a rotary drive (22, 23, 24; 31 to 36; 38).

4. Soil roller according to one of Claims 2 and 3, characterized by at least one brush shaft (21; 39) extending parallel to the axis of rotation (60) of the roller.

5. Soil roller according to one of Claims 3 and 4, characterized in that there is a drive connection, e.g. a chain gear (21, 22, 23), a belt gear or a toothed wheel gear (31 to 36), between the roller body (8) and the brushes (25), a drive wheel (24; 36) being connected rotationally fast to a roller axis (14).

6. Soil roller according to one of Claims 3 and 4, characterized in that the brushes (48, 49) have a drive independent of the roller body (8), e.g. a hydraulic motor (38) which is connectable to a hydraulic system of a tractor, or a gearing mechanism which is connectable directly or indirectly to the power take-off shaft of a tractor.

7. Soil roller according to one of Claims 3 to 6, in particular according to Claim 6, characterized in that the direction (45) of rotation of the brush (37) is opposed to the direction (44) of rotation of the roller body (8) such that the friction of the brush (37) against the roller body (8) exerts a driving action.

8. Soil roller according to one of Claims 3 to 7, characterized in that the absolute rotational speed of the brushes (37) and/or the ratio of rotational speed between the roller body (8) and the brushes (25) is adjustable.

9. Soil roller according to one of the preceding claims, characterized in that the brushes (25; 37) comprise metal, in particular steel, and/or plastics and/or rubber.

10. Soil roller according to one of the preceding claims, characterized in that the brushes have a cylindrical shape (Fig. 4) or the shape of cylinder segments (Fig. 5), the cylinder axis being parallel to the axis of rotation (60) of the roller.

11. Soil roller according to one of the preceding claims, characterized by blade-shaped strippers (19) which are preferably arranged in front of the brushes (25), as seen in the direction of rotation of the roller body (8).

12. Soil roller according to one of the preceding claims, in particular according to Claim 7, characterized in that the brushes (25) are arranged above the roller body (8), preferably offset relative to a vertical longitudinal centre plane of the roller body (8), as regards the direction of travel (F).

13. Soil roller according to one of the preceding claims, characterized in that each brush (48, 49) is associated with a relatively fixed scraper (46, 47) which precedes the brush (48, 49).

14. Soil roller according to Claim 13, characterized in that the scraper (46, 47) is constructed as a brush carrier, the brush (48, 49) preferably being adjustable lengthwise of the scraper (46, 47).

15. Soil roller according to one of Claims 13 and 14, characterized in that the scraper (53, 54) is divided into individual fingers (53a, 53b, 53c, 54a, 54b).

16. Soil roller according to Claim 15, characterized in that two scrapers (53, 54) are arranged mutually diametrically opposed on a rotatable shaft (39), and in that the scraper fingers (53a, 53b, 53c and 54a, 54b respectively) are arranged such that gaps (55, 56 and 57 respectively) between the fingers of one scraper oppose fingers of the other scraper and vice versa.

17. Soil roller according to one of the preceding claims, characterized in that the brushes engage between adjacent groups (11) of elevations (10) with pre-tension.

18. Soil roller according to one of the preceding claims, characterized in that the brushes are constructed as swash plates (30a).

19. Soil roller according to one of the preceding claims, characterized in that the brushes are movable back and forth along the roller body.

20. Soil roller according to one of the preceding claims, characterized in that the brushes (48, 49) are readjustable.

## Revendications

1. Rouleau pour le travail du sol en agriculture, comprenant une enveloppe sensiblement cylindrique (9), qui comporte plusieurs anneaux dentés (11) s'étendant en direction radiale autour de la périphérie de l'enveloppe (9) et plusieurs racloirs (18; 46, 47) disposés dans le domaine des parties cylindriques (12) de l'enveloppe (9) qui ne sont pas occupées par des anneaux dentés (11), caractérisé en ce que, dans le domaine des parties cylindriques (12), sont disposées des brosses (27, 37) à crins élastiques.

2. Rouleau selon la revendication 1, caractérisé en ce que les brosses (25; 37) peuvent tourner.

3. Rouleau selon la revendication 2, caractérisé en ce que les brosses (25, 37) peuvent être déplacées au moyen d'un entraînement en rotation (22, 23, 24; 31 à 36; 38).

4. Rouleau selon l'une des revendications 2 et 3, caractérisé par au moins un arbre de brosse (21; 39) s'étendant parallèlement à l'axe de rotation (60) du rouleau.

5. Rouleau selon l'une des revendications 3 et 4, caractérisé en ce qu'il existe entre le corps (8) de rouleau et les brosses (25) une liaison d'entraînement, par exemple une liaison à chaîne (21, 22, 23), une liaison à courroie ou une liaison à roues dentées (31 à 36), une roue d'entraînement (24; 36) étant reliée de façon fixe en rotation avec un axe de rouleau (14).

6. Rouleau selon l'une des revendications 3 et 4, caractérisé en ce que les brosses (48, 49) présentent un entraînement indépendant du corps de rouleau (8), par exemple un moteur hydraulique (38) qui peut être raccordé à un système hydraulique d'un tracteur ou un entraînement, qui peut être relié indirectement ou directement avec la prise de force d'un tracteur.

7. Rouleau selon l'une des revendications 3 à 6, en particulier selon la revendication 6, caractérisé en ce que le sens de rotation (45) de la brosse (37) est opposé au sens de rotation (44) du corps (8) de rouleau, de sorte que le frottement de la brosse (37) sur le corps (8) de rouleau exerce une action d'entraînement.

8. Rouleau selon l'une des revendications 3 à 7, caractérisé en ce que la vitesse absolue de rotation des brosses (37) et/ou le rapport des vitesses de rotation entre le corps (8) de rouleau et les brosses (25) sont réglables.

9. Rouleau selon l'une des revendications précédentes, caractérisé en ce que les brosses (25; 37) sont constituées de métal, en particulier d'acier et/ou de matières plastiques, et/ou de caoutchouc.

10. Rouleau selon l'une des revendications précédentes, caractérisé en ce que les brosses possèdent une forme cylindrique (figure 4) ou la forme de segments cylindriques (figure 5), l'axe du cylindre étant parallèle à l'axe de rotation (60) du rouleau.

11. Rouleau selon l'une des revendications précédentes, caractérisé par des racloirs en forme de lame (19), qui, vus selon la vue du sens de rotation du corps (8) de rouleau, sont disposés de préférence devant les brosses (25).

12. Rouleau selon l'une des revendications précédentes, en particulier selon la revendication 7, caractérisé en ce que les brosses (25) sont disposées au-dessus du corps (8) de rouleau, de préférence décalées vers l'arrière, en se référant au sens de déplacement F, par rapport à un plan moyen longitudinal vertical du corps (8) de rouleau.

13. Rouleau selon l'une des revendications précédentes, caractérisé en ce qu'à chaque brosse (48, 49) correspond une raclette (46, 47) qui est disposée de façon fixe par rapport à elle et qui précède la brosse (48, 49).

14. Rouleau selon la revendication 13, caractérisé en ce que la raclette (46, 47) est constituée comme portebrosse, la brosse (48, 49) étant de préférence réglable le long de la raclette (46, 47).

15. Rouleau selon l'une des revendications 13 et 14, caractérisé en ce que la raclette (53, 54) est divisée en doigts individuels (53a, 53b, 53c, 54a, 54b).

16. Rouleau selon la revendication 15, caractérisé en ce que deux raclettes (53, 54) sont disposées de façon diamétralement opposée l'une par rapport à l'autre sur un arbre tournant (39) et en ce que les doigts de raclette (53a, 53b, 53c, ou 54a, 54b) sont disposés de telle façon que les intervalles (55, 56 ou 57) entre les doigts de l'une des raclettes sont situés face aux doigts de l'autre raclette et réciproquement.

17. Rouleau selon l'une des revendications précédentes, caractérisé en ce que les brosses pénètrent sous sollicitation entre des groupes voisins (11) d'élévations (10).

18. Rouleau selon l'une des revendications précédentes, caractérisé en ce que les brosses présentent une structure de plateau oscillant (30a).

19. Rouleau selon l'une des revendications précédentes, caractérisé en ce que les brosses sont mobiles en va-et-vient le long du corps de rouleau.

20. Rouleau selon l'une des revendications précédentes, caractérisé en ce que les brosses (48, 49) sont réglables.

Fig.1

Fig.3

Fig 4

Fig.5

Fig.6

Fig.2

_Fig.7_

_Fig.10_

_Fig.9_

_Fig.8_